(19) **Europäisches Patentamt European Patent Office Office européen des brevets**

(11) **EP 2 809 904 B1**

(12) **FASCICULE DE BREVET EUROPEEN**

(45) Date de publication et mention de la délivrance du brevet:
**08.11.2017 Bulletin 2017/45**

(21) Numéro de dépôt: **13706619.7**

(22) Date de dépôt: **01.02.2013**

(51) Int Cl.:
**B64D 33/04** *(2006.01)* **F01D 25/30** *(2006.01)*
**F02C 3/32** *(2006.01)*

(86) Numéro de dépôt international:
**PCT/FR2013/050222**

(87) Numéro de publication internationale:
**WO 2013/114058 (08.08.2013 Gazette 2013/32)**

(54) **PROCEDE D'EJECTION DE GAZ D'ECHAPPEMENT DE TURBINE A GAZ ET ENSEMBLE D'ECHAPPEMENT DE CONFIGURATION OPTIMISEE**

VERFAHREN ZUM AUSTRITT VON ABGASS EINER GASTURBINE UND OPTIMIERTE ABGASEINHEIT

METHOD FOR EXITING EXHAUST OF A GAS TURBINE AND OPTIMISED EXHAUST UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.02.2012 FR 1250934**

(43) Date de publication de la demande:
**10.12.2014 Bulletin 2014/50**

(73) Titulaire: **Safran Helicopter Engines 64510 Bordes (FR)**

(72) Inventeurs:
- **AMMON, Fabian**
  **F-64510 Baliros (FR)**
- **BRISSON, Alexandre**
  **F-Ousse 64320 (FR)**

- **CRABE, Guy**
  **F-64290 Gan (FR)**
- **DEMOLIS, Jacques**
  **F-64140 Lons (FR)**
- **HOUSSAYE, Laurent**
  **F-64110 Saint Faust (FR)**
- **MUNOZ, Julien**
  **F-64230 Bougarbet (FR)**

(74) Mandataire: **Gevers & Orès 9 rue St Antoine du T 31000 Toulouse (FR)**

(56) Documents cités:
EP-A2- 1 780 124     WO-A1-03/037715
US-A- 4 018 046      US-A1- 2005 274 117
US-A1- 2006 059 891

## Description

### DOMAINE TECHNIQUE

L'invention se rapporte à un procédé d'éjection de gaz d'échappement de turbine à gaz ainsi qu'à un ensemble d'échappement présentant une jonction entre une tuyère et un éjecteur de configuration apte à mettre en oeuvre ce procédé.

Le domaine de l'invention se rapporte aux turbines à gaz et plus particulièrement aux moyens dédiés à l'échappement des gaz émis par ces turbines comme décrit dans EP 1780124 A.

Les moteurs d'hélicoptères comportent classiquement un générateur de gaz (ensemble de compresseur, chambre de combustion et turbine) qui fournit un flux de gaz de grande énergie cinétique à partir d'un mélange de carburant et d'air sous pression injecté dans la chambre de combustion, et une turbine entraînée en rotation par le flux de gaz pour délivrer de la puissance mécanique sur un arbre de sortie via un train d'engrenages.

Cette turbine dite de puissance est couplée à une tuyère d'échappement, elle-même prolongée par un éjecteur, l'ensemble étant destiné à maintenir la pression statique en sortie de la turbine libre à un faible niveau et à limiter les pertes de pression totale. Le rendement de l'ensemble turbine libre et échappement est ainsi amélioré et la puissance mécanique transmise à l'arbre de sortie est augmentée. Par ailleurs, l'éjecteur peut être avantageusement coudé pour dévier la sortie de flux gazeux de la poutre ou du rotor de queue de l'hélicoptère.

### ÉTAT DE LA TECHNIQUE

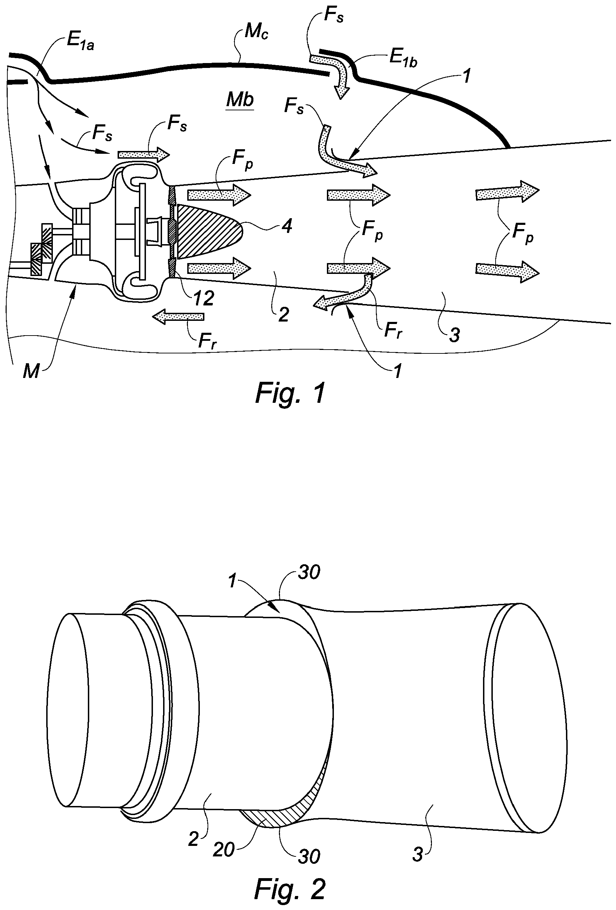

Afin de ventiler et de refroidir les équipements (pompe, alternateur, boîtiers électriques, etc.) du moteur M quel que soit l'état de fonctionnement de l'ensemble hélicoptère et moteur, le schéma en coupe de la figure 1 illustre l'utilisation de flux secondaires d'air frais Fs, provenant de l'extérieur à pression ambiante via des passages d'entrée E1a, E1b du capot moteur Mc et circulant dans la baie moteur Mb. Les flux secondaires Fs s'écoulent le long du moteur M ainsi que le long de la tuyère primaire 2. A l'extrémité arrière de la turbine à gaz, ces flux Fs sont au moins partiellement aspirés à travers une ouverture périphérique 1 entre l'extrémité aval de la tuyère 2 et l'extrémité amont de l'éjecteur 3 qui l'entoure à distance. Les flux secondaires Fs sont générés par l'effet d'entraînement du flux primaire Fp chaud sortant de la tuyère 2, autour du cône 4 ainsi que par l'effet de dépression engendrée par la forme de l'éjecteur 3. La forme de l'extrémité amont de l'éjecteur 3 favorise la stabilité de l'aspiration des flux secondaires générée par ces deux effets. La forme de l'extrémité amont de l'éjecteur 3 en trompe en est un exemple.

Le fonctionnement nominal d'un éjecteur est de permettre une aspiration d'air frais par l'ouverture 1 formée entre cet éjecteur 3 et la tuyère 2. Or, en fonction des régimes moteur (décollage, phases de transition, régime de recherche, atterrissage, etc.) et des conditions de vol, cette même ouverture 1 peut être franchie - en sens inverse - par de l'air primaire chaud Fp qui est alors partiellement refoulé, selon les flèches Fr, vers la baie moteur Mb.

Dans ce cas, la baie moteur Mb et les équipements sont chauffés au lieu d'être refroidis. De plus, le débit d'air frais secondaire aspiré est alors diminué et le refroidissement des gaz chauds du flux primaire en sortie de l'échappement est en conséquence atténué.

Par ailleurs la giration de l'air en sortie de la turbine entraine celle de l'air aspiré dans le flux secondaire FS à travers l'ouverture périphérique 1. C'est un phénomène complémentaire à prendre en compte dans les perturbations qui peuvent conduire à un refoulement à travers l'ouverture périphérique 1. On connaît des moyens redresseurs du flux traversant l'ouverture périphérique (EP 1780 124) dont l'objectif est de diminuer ce refoulement par l'augmentation d'impulsion vers l'aval. Cependant ces moyens ne garantissent pas un résultat à tous les régimes du moteur et peuvent être difficiles à installer lorsque l'éjecteur 3 est coudé.

### EXPOSÉ DE L'INVENTION

L'invention vise à empêcher le refoulement d'air primaire chaud via l'ouverture périphérique décrite ci-dessus. Pour ce faire, l'invention prévoit de fermer partiellement cette ouverture périphérique pour empêcher le refoulement du flux primaire dans la baie moteur.

Plus précisément, la présente invention a pour objet un procédé d'éjection de gaz d'échappement d'une turbine à gaz à l'aide d'une tuyère d'échappement d'un flux primaire de gaz chauds, la turbine à gaz comportant une baie moteur d'équipements moteur et munie d'entrées de flux secondaires d'air frais pour ventiler la baie moteur, refroidir les équipements moteur et le flux de gaz primaire par mélange dans l'échappement. La tuyère est prolongée par un éjecteur qui l'entoure avec un taux de recouvrement déterminé pour former ensemble une veine d'échappement des gaz. Une ouverture périphérique est formée entre la tuyère et l'éjecteur. La position et l'angle au centre d'au moins un secteur de l'ouverture périphérique susceptible de constituer une zone de réingestion du flux primaire dans la baie moteur sont déterminés par corrélation des interactions entre les flux secondaires et le flux primaire à partir des paramètres de giration et de vitesse de l'air en entrée de tuyère, des géométries de la veine et de la baie moteur, ainsi que de la géométrie et de la position des entrées des flux secondaires de refroidissement du flux primaire. Cette ouverture périphérique est alors fermée sur le(s) secteur(s) angulaire(s) ainsi identifié(s) et s'étend sur au moins sensiblement 30 degrés.

Selon des modes de mise en oeuvre préférés :

- La hauteur d'ouverture périphérique rapportée au diamètre hydraulique interne de la tuyère est déterminée en fonction des mêmes paramètres de giration et de vitesse de l'air, de la géométrie d'échappement et celle des flux secondaires que ci-dessus afin d'empêcher la ré-ingestion du flux primaire ;
- l'ouverture périphérique est fermée sur au moins un secteur angulaire s'étendant au moins partiellement de manière diamétralement opposé à au moins une entrée de flux secondaire de la baie moteur ;
- l'éjecteur formant un coude pour dévier la sortie des flux gazeux, l'amplitude de l'angle de la veine d'échappement au niveau de ce coude et la position axiale de ce coude corrèlent l'amplitude de l'angle du secteur à fermer ;
- dans ce dernier cas, l'ouverture périphérique est fermée sur au moins un secteur angulaire positionné sur une portion amont de courbure externe formée par le coude de l'éjecteur.

L'invention se rapporte également à un ensemble d'échappement de turbine à gaz apte à mettre en oeuvre le procédé ci-dessus, et comportant une baie moteur et une tuyère d'échappement d'un flux primaire de gaz chauds. Dans cet ensemble, la tuyère est prolongée par un éjecteur qui la recouvre sur une distance longitudinale donnée, en formant une ouverture périphérique entre la tuyère et l'éjecteur. Des passages d'entrée de flux secondaires d'air frais sont ménagés dans un capot moteur qui enveloppe la baie moteur. L'ouverture périphérique présente au moins une fermeture qui s'étend sur un secteur angulaire au moins égal à sensiblement 30 degrés.

Selon des modes de réalisation avantageux :

- la fermeture d'un secteur angulaire est réalisée par une technologie choisie entre un collage de bande en matériau composite, un soudage d'une bande de tôle, une courbure appropriée de l'éjecteur qui vient alors se coupler à la tuyère, et une fixation de l'éjecteur sur la tuyère par solidarisation de pièces d'extension situées en regard ; ces solutions présentent l'avantage d'éviter l'utilisation de pattes d'attache pour le maintien de l'éjecteur en son extrémité amont et qui obturent l'ouverture périphérique restée ouverte ;
- deux secteurs fermés de même extension sont séparés par un secteur ouvert intermédiaire, ce dernier étant globalement diamétralement opposé au reste de l'ouverture périphérique ;
- les deux secteurs fermés s'étendent sur une plage située entre 30 et 90 degrés et le secteur intermédiaire entre 30 et 60 degrés ;
- l'interruption d'ouverture, tout secteur fermé cumulé, s'étend sensiblement entre 30 et 270 degrés, de préférence entre 60 et 180° ;
- le nombre de secteurs ouverts est au plus égal à 5.

**PRÉSENTATION DES FIGURES**

D'autres données, caractéristiques et avantages de la présente invention apparaîtront à la lecture de la description non limitée qui suit, en référence aux figures annexées qui représentent, respectivement :

- la figure 1, un schéma en coupe longitudinale partielle d'une extrémité arrière de turbine à gaz selon l'état de la technique (déjà commentée) ;
- la figure 2, une vue latérale de l'ouverture périphérique entre une tuyère et un éjecteur coudé avec un exemple de fermeture locale de cette ouverture tuyère/éjecteur selon l'invention;
- les figures 3a et 3b, des vues schématiques en coupe transversale au niveau du recouvrement tuyère/éjecteur avec un couplage entre l'éjecteur et la tuyère pour former respectivement un et deux secteurs fermés selon l'invention ;
- la figure 4, une vue schématique en coupe longitudinale localisée au niveau d'un secteur ouvert entre la tuyère et l'éjecteur ;
- la figure 5, une vue en coupe longitudinale partielle d'une extrémité arrière de turbine à gaz selon la figure 1 avec un exemple de localisation de section fermée d'une ouverture en fonction de la position de l'entrée du flux secondaire de refroidissement du flux primaire ; et
- la figure 6, une vue en coupe longitudinale partielle d'une extrémité arrière de turbine à gaz selon la figure 1 avec un exemple de localisation de section fermée d'une ouverture lorsque l'éjecteur est coudé.

**DESCRIPTION DÉTAILLÉE**

Dans le présent texte, le terme « longitudinal » signifie le long de la ligne centrale de la turbine à gaz, le terme « transversal » se définissant perpendiculairement à cet axe et le terme « radial » s'étendant dans un plan transversal à partir de cet axe. Les termes « amont » et « aval » se rapportent au sens global d'écoulement des flux d'air le long de l'axe longitudinal d'une turbine à gaz jusqu'à leur éjection finale dans la tuyère. Dans les exemples illustrés, des hélicoptères sont propulsés par des turbines à gaz. Par ailleurs, des signes de référence identiques renvoient aux passages dans lesquels ces éléments sont décrits.

En référence à la vue latérale de l'ouverture périphérique 1 de la figure 2, un exemple de fermeture locale de cette ouverture 1 entre une tuyère 2 et un éjecteur coudé 3 d'une turbine à gaz est illustré. Cette fermeture est réalisée par une pièce 20 rapportée sur la tuyère 2 et sur l'éjecteur 3 au niveau de l'extrémité amont 30 de l'éjecteur formant le bord relevé « en trompe » de cette extrémité. La pièce peut être en tôle ou en matériau composite. Tout moyen de solidarisation approprié peut être utilisé : soudure, collage, etc.

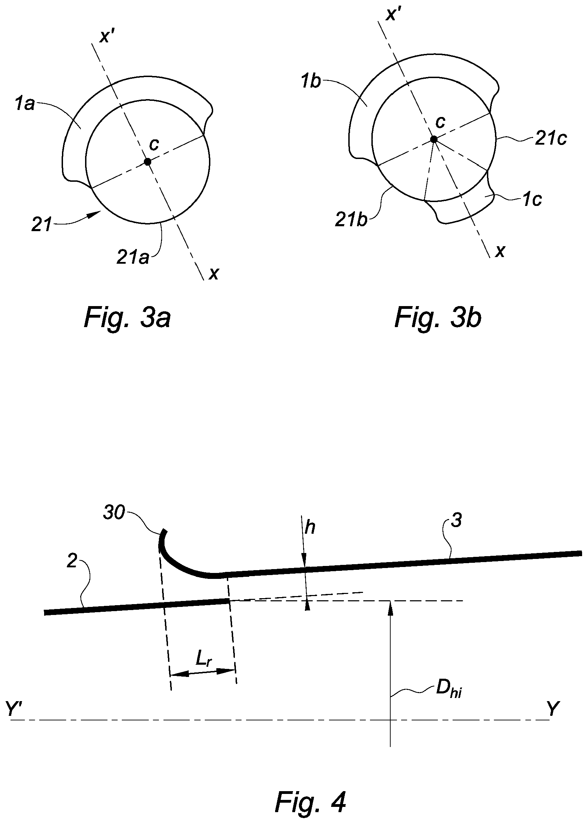

Dans l'exemple, la pièce de fermeture 20 s'étend sur un secteur angulaire sensiblement égal à 120°. Selon d'autres exemples de mise en oeuvre, illustrés par les figures 3a et 3b, la section fermée 21 peut s'étendre, respectivement, selon un secteur unique 21a de l'ordre de 180° (figure 3a) ou selon deux secteurs 21b et 21c d'angle au centre C égal à 60° chacun (figure 3b). Les secteurs fermés 21a, et 21b - 21c sont complétés par des secteurs ouverts 1a, et 1b - 1c.

Dans l'exemple selon la figure 3b, les secteurs fermés 21b et 21c sont de même extension, séparés par un secteur ouvert intermédiaire 1c d'angle au centre C égal à environ 60°, ce dernier étant globalement diamétralement opposé au reste de l'ouverture périphérique 1b de plus grande amplitude que le secteur intermédiaire 1c, d'angle au centre de l'ordre de 180°. Plus précisément, les secteurs ouverts 1a, 1b et 1c s'étendent symétriquement autour de l'axe radiale x'x orienté selon la position de l'entrée du flux secondaire d'air frais, comme décrit ci-après.

Par ailleurs, le positionnement tuyère/éjecteur présente la géométrie illustrée par la figure 4 selon une coupe longitudinale le long de l'axe Y'Y au niveau d'un secteur ouvert entre la tuyère 2 et l'éjecteur 3. Deux caractéristiques relatives sont avantageusement déterminées à partir de cette géométrie:

- la longueur de recouvrement « Lr », entre le bord 30 de l'éjecteur 3 et l'extrémité de la tuyère 2, rapportée à la hauteur « h » séparant radialement la tuyère de l'éjecteur, avec

$$1 \le L_r/h \le 15$$

- le taux d'ouverture de la hauteur « h » rapportée au diamètre hydraulique interne « $D_{hi}$ » de la tuyère 2, avec

$$3\% \le h/D_{hi} \le 12\%$$

De manière plus générale, la position et l'angle au centre des secteurs de l'ouverture périphérique sont déterminés par corrélation des interactions par une modélisation par exemple à l'aide d'outils numériques, entre les flux secondaires Fs et le flux primaire Fp à partir des paramètres de giration et de vitesse de l'air en entrée de turbine libre 12 (figure 1), des géométries de la veine d'échappement et de la baie moteur Mb, ainsi que de la géométrie et de la position des entrées des flux secondaires E1a et E1b. Cette ouverture périphérique est alors fermée sur les secteurs angulaires ainsi identifiés.

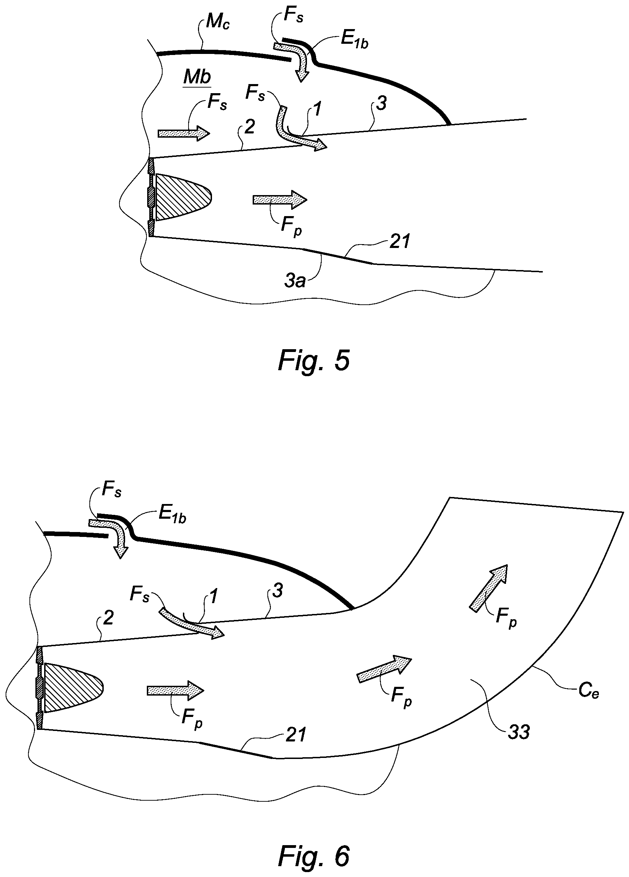

Un exemple de positionnement d'une section fermée 21 de l'ouverture périphérique 1 est présenté en référence à la vue en coupe longitudinale partielle de la figure 5, se rapportant à l'extrémité arrière d'une turbine à gaz. La section fermée 21 s'étend selon une courbure appropriée « en continuité » depuis l'extrémité amont 3a de l'éjecteur 3 qui vient alors se coupler à la tuyère 2. Dans cet exemple, le dernier passage d'entrée d'air E1 b d'un flux secondaire Fs, est disposé au même niveau radial que l'aspiration de ces flux secondaire Fs dans l'ouverture 1 entre la tuyère 2 et l'éjecteur 3. La section 21 est alors positionnée de manière radialement opposée au passage d'entrée d'air E1 b du flux secondaire Fs à travers le capot moteur Mc de la baie moteur Mb.

De manière générale, la jonction de type « continue » ou équivalent présente l'avantage de pouvoir supprimer les pattes de fixation entre la tuyère et l'éjecteur, en particulier lorsque les secteurs fermés s'étendent sur plus de 180°.

En référence à la vue en coupe longitudinale partielle de la figure 6, l'extrémité arrière d'une turbine à gaz comporte un éjecteur coudé 3. La section fermée 21 s'étend sur un secteur angulaire positionné sur une portion amont de la courbure externe Ce formée par le coude 33 de l'éjecteur.

L'invention n'est pas limitée aux exemples de réalisation décrits et représentés. En particulier d'autres configurations peuvent être prévues pour guider les flux secondaires dans la baie moteur pour refroidir le flux primaire.

Par ailleurs, la giration de l'air en sortie de turbine libre est un paramètre essentiel de détermination de la giration de l'air en entrée de tuyère. La géométrie de l'échappement des gaz dépend en particulier d'une configuration au moins partiellement axisymétrique de la veine de la tuyère, de la présence et du nombre de bras ou d'obstacles dans la veine d'échappement. La tuyère et l'éjecteur peuvent comporter plusieurs coudes : le nombre et la position des coudes peuvent également être des facteurs à prendre en compte. De plus, concernant la géométrie de la baie moteur comme paramètre, il peut être utile de prendre en compte la présence d'obstacles dans la baie et des parois de contact des flux secondaires, ainsi que le nombre, la position et la configuration des entrées des flux secondaires.

**Revendications**

1. Procédé d'éjection de gaz d'échappement d'une turbine à gaz comportant une baie moteur (Mb) et une tuyère d'échappement (2) d'un flux primaire de gaz chauds (Fp), ainsi que des entrées (E1) de flux secondaires d'air frais (Fs) dans la baie moteur (Mb) d'équipements moteur et munie d'entrées (E1 a, E1 b) de flux secondaires d'air frais (Fs) pour ventiler la baie, refroidir la baie moteur et le flux de gaz primaire, la tuyère (2) étant prolongée par un éjecteur (3) qui l'entoure avec un taux de recouvrement (Lr/h) déterminé pour former ensemble une veine d'échappement des gaz, une ouverture périphérique (1) est formée entre la tuyère (2) et l'éjecteur (3), **caractérisé en ce que** la position et l'angle au centre (C) d'au moins un secteur (21 ; 21a, 21b, 21c) de l'ouverture périphérique (1) susceptible de constituer une zone de ré-ingestion du flux primaire (Fp) dans la baie moteur (Mb) sont déterminés par corrélation des interactions entre les flux secondaires (Fs) et le flux primaire (Fp) à partir des paramètres de giration et de vitesse de l'air en entrée de tuyère (2), des géométries de la veine d'échappement (2,3) et de la baie moteur (Mb), ainsi que de la géométrie et de la position des entrées (E1a, E1 b) de flux secondaires (Fs), et **en ce que** cette ouverture périphérique est alors fermée sur le(s) secteur(s) angulaire(s) (21 ; 21a, 21b, 21c) ainsi identifié(s) et s'étendant sur au moins sensiblement 30 degrés.

2. Procédé d'éjection de gaz selon la revendication 1, dans lequel la hauteur d'ouverture périphérique rapportée au diamètre hydraulique interne de la tuyère est déterminée en fonction des mêmes paramètres de giration de l'air, de la géométrie d'échappement et celle des flux secondaires que ci-dessus afin d'empêcher la ré-ingestion du flux primaire.

3. Procédé d'éjection de gaz selon l'une des revendications 1 ou 2, dans lequel l'ouverture périphérique est fermée sur au moins un secteur angulaire s'étendant au moins partiellement de manière diamétralement opposée à au moins une entrée de flux secondaire de la baie moteur.

4. Procédé d'éjection de gaz selon l'une des revendications 1 à 3 dans lequel, l'éjecteur formant un coude pour dévier la sortie des flux gazeux, l'amplitude de l'angle de la veine d'échappement au niveau de ce coude et la position axiale de ce coude corrèlent l'amplitude de l'angle du secteur à fermer.

5. Procédé d'éjection de gaz selon la revendication précédente, dans lequel l'ouverture périphérique est fermée sur au moins un secteur angulaire positionné sur une portion amont (21) de courbure externe (Ce) formée par le coude de l'éjecteur.

6. Ensemble d'échappement de turbine à gaz apte à mettre en oeuvre le procédé selon l'une des revendications précédentes, comportant une baie moteur et une tuyère d'échappement d'un flux primaire de gaz chauds, dans lequel la tuyère est prolongée par un éjecteur qui la recouvre sur une distance longitudinale donnée, en formant une ouverture périphérique entre la tuyère et l'éjecteur et des passages d'entrée de flux secondaires d'air frais étant ménagés dans un capot moteur qui enveloppe la baie moteur, ledit ensemble d'échappement de turbine à gaz étant **caractérisé en ce que** l'ouverture périphérique présente au moins une fermeture qui s'étend sur un secteur angulaire au moins égal à sensiblement 30 degrés.

7. Ensemble d'échappement selon la revendication précédente, dans lequel la fermeture d'un secteur angulaire est réalisée par une technologie choisie entre un collage de bande en matériau composite, un soudage d'une bande de tôle, une courbure appropriée de l'éjecteur qui vient alors se coupler à la tuyère, et une fixation de l'éjecteur sur la tuyère par solidarisation de pièces d'extension situées en regard.

8. Ensemble d'échappement selon la revendication précédente, dans lequel deux secteurs fermés (21b, 21c) de même extension sont séparés par un secteur ouvert intermédiaire (1c), ce dernier étant globalement diamétralement opposé au reste de l'ouverture périphérique (1b).

9. Ensemble d'échappement selon l'une des revendications 6 à 8, dans lequel l'interruption d'ouverture, tout secteur fermé cumulé, s'étend sensiblement entre sensiblement 30 degrés et 270 degrés.


**Patentansprüche**

1. Verfahren zum Ausstoßen von Abgasen von einer Gasturbine, die einen Motorraum (Mb) und eine Austrittsdüse (2) eines Primärstroms von heißen Gasen (Fp) und auch Einlässe (E1) von Sekundärströmen von Frischluft (Fs) in den Motorraum (Mb) von Motorausrüstungen aufweist und die mit Einlässen (E1a, E1b) von Sekundärströmen von Frischluft (Fs) versehen ist, um den Motorraum zu belüften, den Motorraum und den Primärgasstrom abzukühlen, wobei die Düse (2) durch einen Ejektor (3) verlängert ist, der sie umgibt, mit einer bestimmten Rückgewinnungsrate (Lr/h), um zusammen einen Abgaskanal zu bilden, wobei eine Umfangsöffnung (1) zwischen der Düse (2) und dem Ejektor (3) gebildet ist, **dadurch gekennzeichnet, dass** die Position und der Winkel in der Mitte (C) von mindestens einem Bereich (21; 21a, 21b, 21c) der Umfangsöffnung (1), der einen Bereich der Wiederaufnahme des Primärstroms (Fp) in den Motorraum (Mb) bilden kann, durch Korrelation der Interaktionen zwischen dem Sekundärstrom (Fs) und dem Primärstrom (Fp) ausgehend von den Parametern der Drehung und der Geschwindigkeit der Luft am Einlass der Düse (2), den Geometrien des Abgaskanals (2, 3) und des Motorraums (Mb) und der Geometrie und der Position der Einlässe (E1a, E1b) der Sekundärströmungen (FS) bestimmt werden, und dass diese Umfangsöffnung dann auf dem (n) auf diese Weise identifizierten Winkelsektor (en) (21; 21a, 21b, 21c) geschlossen wird und sich mindestens über im Wesentlichen 30 Grad erstreckt.

2. Verfahren zum Ausstoßen von Gas nach Anspruch 1, wobei die Höhe der Umfangsöffnung bezogen auf den hydraulischen Innendurchmesser der Düse in Abhängigkeit von den gleichen Parametern der Drehung der Luft, der Abgasgeometrie und jener der Sekundärströme wie oben bestimmt wird, um die Wiederaufnahme des Primärstroms zu verhindern.

3. Verfahren zum Ausstoßen von Gas nach einem der Ansprüche 1 oder 2, wobei die Umfangsöffnung auf mindestens einem Winkelsektor geschlossen wird, der sich mindestens teilweise diametral entgegengesetzt zu mindestens einem Einlass des Sekundärstroms des Motorraums erstreckt.

4. Verfahren zum Ausstoßen von Gas nach einem der Ansprüche 1 bis 3, wobei, nachdem der Ejektor eine Biegung bildet, um den Austritt der Gasströme umzulenken, die Amplitude des Winkels des Abgaskanals an dieser Biegung und die axiale Position dieser Biegung die Amplitude des Winkels des zu schließenden Sektors korrelieren.

5. Verfahren zum Ausstoßen von Gas nach dem vorhergehenden Anspruch, wobei die Umfangsöffnung auf mindestens einem Winkelsektor geschlossen wird, der auf einem vorgelagerten Abschnitt (21) der äußeren Krümmung (Ce) positioniert ist, die von der Biegung des Ejektors gebildet wird.

6. Abgasanordnung einer Gasturbine, die geeignet ist, das Verfahren nach einem der vorhergehenden Ansprüche umzusetzen, umfassend einen Motorraum und eine Austrittsdüse eines Primärstroms von heißen Gasen, wobei die Düse durch einen Ejektor verlängert ist, der sie über einen gegebenen Längsabstand bedeckt und dabei eine Umfangsöffnung zwischen der Düse und dem Ejektor bildet, und wobei Einlässe von Sekundärströmen von Frischluft in einer Motorhaube ausgebildet sind, die den Motorraum umgibt, wobei die Abgasanordnung einer Gasturbine **dadurch gekennzeichnet ist, dass** die Umfangsöffnung mindestens einen Verschluss aufweist, der sich über einen Winkelsektor erstreckt, der mindestens im Wesentlichen gleich 30 Grad ist.

7. Abgasanordnung nach dem vorhergehenden Anspruch, wobei der Verschluss eines Winkelsektors durch eine Technologie erstellt ist, die aus einem Kleben eines Verbundwerkstoffbandes, einem Schweißen eines Blechbandes, einem geeigneten Krümmen eines Injektors, der dann mit der Düse verbunden wird, und einem Befestigen des Injektors auf der Düse durch Verbinden von Erweiterungsteilen, die einander gegenüber angeordnet sind, ausgewählt ist.

8. Abgasanordnung nach dem vorhergehenden Anspruch, wobei die zwei geschlossenen Bereiche (21b, 21c) von gleicher Ausdehnung durch einen offenen Zwischenbereich (1c) getrennt sind, wobei dieser Letztere insgesamt diametral entgegengesetzt zu dem Rest der Umfangsöffnung (1b) ist.

9. Abgasanordnung nach einem der Ansprüche 6 bis 8, wobei sich die Unterbrechung der Öffnung, alle geschlossenen Bereiche zusammengenommen, im Wesentlichen zwischen 30 Grad und 270 Grad erstreckt.

**Claims**

1. Method for discharging exhaust gas from a gas turbine comprising an engine bay (Mb) and an exhaust pipe (2) for a primary flow of hot gases (Fp), as well as inlets (E1) for secondary flows of fresh air (Fs) in the engine bay (Mb) for engine equipment and provided with inlets (E1a, E1 b) for secondary flows of fresh air (Fs) in order to ventilate the bay, to cool the engine bay and the primary gas flow, the pipe (2) being extended by an ejector (3) which surrounds said pipe with a rate of overlap (Lr/h) determined in order together to form a gas exhaust stream, a peripheral opening (1) is formed between the pipe (2) and the ejector (3), **characterised in that** the position and the angle at the centre (C) of at least one sector (21 ; 21a, 21b, 21c) of the peripheral opening (1) capable of forming an area for the reingestion of the primary flow (Fp) into the engine bay (Mb) are determined by correlation of the interactions between the secondary flows (Fs) and the primary flow (Fp), from the parameters of air gyration and speed at the inlet of the pipe (2), geometries of the exhaust stream (2, 3) and the engine bay (Mb), and also the geometry and position of the inlets (E1a, E1b) of secondary flows (Fs), and **in that** this peripheral opening is then closed over the angular sector(s) (21 ; 21a, 21b, 21c) identified in this way and extending over at least substantially 30 degrees.

2. Method for discharging gas according to claim 1, wherein the peripheral opening height relative to the internal hydraulic diameter of the pipe is determined on the basis of the same parameters of air gyration, the exhaust geometry and the geometry of the secondary flows as above in order to prevent the reingestion of the primary flow.

3. Method for discharging gas according to either claim 1 or claim 2, wherein the peripheral opening is closed over at least one angular sector extending at least partially diametrically opposite at least one secondary flow inlet of the engine bay.

4. Method for discharging gas according to any of claims 1 to 3, wherein the ejector forming an elbow in order to divert the outlet of the gas flows, the amplitude of the angle of the exhaust stream in the region of this elbow and the axial position of this elbow correlate with the amplitude of the angle of the sector to be closed.

5. Method for discharging gas according to the preceding claim, wherein the peripheral opening is closed over at least one angular sector positioned on an upstream portion (21) of external curvature (Ce) formed by the elbow of the ejector.

6. Gas turbine exhaust assembly suitable for carrying out the method according to any of the preceding claims, comprising an engine bay and a discharge pipe for a primary flow of hot gases, wherein the pipe is extended by an ejector which overlaps said pipe over a given longitudinal distance, forming a peripheral opening between the pipe and the ejector and inlet passages for secondary flows of fresh air being arranged in an engine cowling which envelops the engine bay, said gas turbine exhaust assembly being **characterised in that** the peripheral opening has at least one closure which extends over an angular sector at least equal to substantially 30°.

7. Gas turbine exhaust assembly according to the preceding claim, wherein the closure of an angular sector is produced using a technology chosen from among bonding of a strip of composite material, welding of a strip of sheet metal, appropriate curvature of the ejector which is then coupled to the pipe, and fixing of the ejector on the pipe by rigid connection of opposite extension parts.

8. Gas turbine exhaust assembly according to the preceding claim, wherein two closed sectors (21b, 21c) of the same extension are separated by an intermediate open sector (1c), said intermediate open sector being generally diametrically opposite the rest of the peripheral opening (1b).

9. Gas turbine exhaust assembly according to any of claims 6 to 8, wherein the interruption of opening, all closed sectors combined, extends substantially between 30 and 270°.

Fig. 1

Fig. 2

*Fig. 3a*

*Fig. 3b*

*Fig. 4*

$F_s$

$M_c$

$E_{1b}$

$Mb$

$F_s$    $F_s$

1

3

2

$F_p$

21

3a

**Fig. 5**

$F_s$

$E_{1b}$

$F_s$    1    3

2

$F_p$

$F_p$

$F_p$

$C_e$

21    33

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1780124 A